# FASCICULE DE BREVET EUROPEEN

(11) **EP 3 233 610 B1**
(45) Date de publication et mention de la délivrance du brevet: **20.02.2019**
(21) Numéro de dépôt: 15817982.0
(22) Date de dépôt: 10.12.2015
(51) Int. Cl.: B62D 25/08, B60R 5/04

(54) **TABLETTE ARRIÈRE DE VÉHICULE AUTOMOBILE EN MATÉRIAU COMPOSITE**
KRAFTFAHRZEUGHUTABLAGE AUS VERBUNDMATERIAL
MOTOR VEHICLE REAR PARCEL SHELF MADE OF COMPOSITE MATERIAL

(30) Priorité: 19.12.2014 FR 1462977
(43) Date de publication de la demande: 25.10.2017
(73) Titulaire: Compagnie Plastic Omnium, 69007 Lyon (FR)
(72) Inventeur: KHAYAT, Issam, 69007 Lyon (FR)
(74) Mandataire: Andrieux, Benoît
(86) Numéro de dépôt international: PCT/FR2015/053402
(87) Numéro de publication internationale: WO 2016/097537

(56) Documents cités:
- EP-A1- 0 085 851
- EP-A1- 1 258 398
- FR-A1- 2 779 403
- GB-A- 2 379 419
- JP-A- S5 737 040
- JP-A- S6 167 645
- JP-A- H09 216 303
- JP-A- S58 177 740
- JP-A- S62 157 841
- JP-A- S63 235 177
- JP-A- 2001 246 984
- US-A- 4 351 559
- US-A- 4 778 709
- US-A- 5 921 605
- US-A1- 2005 263 461
- US-A1- 2014 110 963

## Description

La présente invention concerne une tablette arrière de véhicule automobile destinée à séparer l'habitacle du compartiment à bagages du véhicule. Un tel véhicule est connu du document US 2005/263461.

Dans tous les véhicules de type berline possédant une malle à l'arrière du véhicule, une pièce appelée tablette arrière permet la séparation horizontale de la zone dite d'habitacle de celle de la malle arrière. Cette pièce est composée d'une structure et d'une garniture d'habitacle pour obtenir l'aspect intérieur. Ces deux derniers devant assurer les interfaces avec une multitude de fonctions.

La structure de la tablette arrière est un composant structurel entièrement intégré dans la caisse en blanc. La caisse en blanc est généralement composée de pièces en tôles métalliques issues de l'emboutissage, ces pièces étant assemblées sur la ligne de ferrage.

La structure de la tablette arrière agit sur la raideur globale du véhicule, car elle permet à la structure complète du véhicule de répondre correctement aux sollicitations de torsions statiques et dynamiques provoquées par les conditions de roulage. En effet, la tablette arrière vient rigidifier la caisse en blanc en partie médiane (dans le sens de la hauteur), comme le plancher le fait en partie basse, et le pavillon en partie haute.

C'est pourquoi, cette structure de plage arrière est composée de pièces en tôles métalliques embouties, assemblée à la caisse en blanc avant le passage en peinture par différents procédés : soudure, rivetage et/ou collage.

L'inconvénient majeur de ce type de structure en tôle est une masse importante, alors que tous les constructeurs automobiles essaient de réduire au maximum la masse d'un véhicule.

Par ailleurs, la structure de la tablette arrière comporte généralement un nombre important de pièces, nécessitant ainsi une multitude d'opérations d'assemblages pour former un ensemble prêt à être assembler à une caisse en blanc de véhicule automobile.

Enfin, la structure de la tablette arrière comporte des interfaces fonctionnelles (10) avec les pièces voisines : garniture d'habitacle et de coffre, ancrages des ceintures, ancrage du système dit « isofix » (norme ISO d'ancrage pour les sièges pour enfants), caisson de basse, faisceaux électriques, etc... Chaque interface fonctionnelle est généralement intégrée séparément lors du montage.

Ainsi, une structure de tablette arrière exige, une fois assemblée à la caisse en blanc, un nombre important d'opérations de montage des équipements fonctionnels aux interfaces fonctionnelles (10).

L'invention a pour but de remédier à ces inconvénients, en fournissant une tablette arrière de véhicule automobile légère et ne nécessitant pas d'opération d'assemblage de pièces et d'interfaces fonctionnelles (10), tout en garantissant sa propriété structurelle.

Ainsi, l'objet de l'invention concerne une tablette arrière de véhicule automobile destinée à séparer l'habitacle du compartiment à bagages du véhicule. La tablette comporte :
- une première poutre et une seconde poutre, lesdites poutres étant en matériau composite et adaptées à être reliées d'une manière rigide aux deux côtés de caisse d'un véhicule automobile ; et
- un panneau en matériau composite reliant les deux poutres entre elles.

Selon l'invention, au moins une des poutres peut comporter un ensemble de nervures de rigidification, et au moins une des poutres peut comporter un corps creux pour en améliorer la rigidité.

De préférence, au moins l'une des poutres comporte un ensemble d'interfaces fonctionnelles moulées et/ou le panneau comporte un ensemble d'interfaces fonctionnelles moulées.

Selon l'invention, au moins un matériau composite peut être choisi parmi les matériaux suivants :
- matériau thermodurcissable comportant des éléments de renfort ;
- matériau thermoplastique comportant des éléments de renfort.

Préférentiellement, au moins une extrémité d'au moins une des poutres et/ou le panneau comporte une interface métallique pouvant servir de liaison avec les côtés de caisse.

Cette interface métallique peut être rapportée sur la poutre et/ou le panneau en étant surmoulée, bouterollée, collée, emmanchée, rivetée, vissée et/ou sertie.

Avantageusement, au moins une des poutres comporte un moyen d'assemblage aux deux côtés de caisse, le moyen étant issu de l'opération de moulage de ladite poutre.

Selon un mode de réalisation, la première poutre intègre au moins l'un des éléments suivants : une fixation isofix centrale, un logement et une fixation d'un enrouleur central, des crochets et compléments de fixation pour un dossier de siège arrière.

Selon un mode de réalisation, la seconde poutre intègre un support transversal pour piste de collage de lunette arrière. Le support transversal peut être un insert métallique surmoulé.

Selon un mode de réalisation, la seconde poutre intègre au moins l'un des éléments suivants : un canal supérieur central d'évacuation des eaux de pluie autour de l'ouverture de coffre, un bord supérieur central d'emmanchement de joint d'étanchéité, un logement avec un moyen pour clipper un éclairage de coffre.

Selon un mode de réalisation, le panneau intègre au moins l'un des éléments suivants : le boitier de caisson de basse, les supports de fixation de l'amplificateur, un réseau de nervure permettant de clipper des faisceaux électrique du périmètre.

Avantageusement, la tablette peut comporter un encliquetage pour garniture d'habitacle assurant l'aspect intérieur.

Enfin, le panneau peut être rapporté sur la première poutre et/ou sur la seconde poutre.

L'invention concerne également, un ensemble comportant une tablette arrière selon l'invention et une caisse en blanc de véhicule automobile.

De préférence, la première poutre peut être reliée aux côtés de caisse au niveau des passages de roue arrière, et la seconde poutre peut être reliée aux côtés de caisse au niveau d'une zone pouvant supporter une lunette arrière de véhicule.

La tablette peut être reliée aux côtés de caisse par une liaison mécanique rigide non démontable située aux extrémités d'au moins une poutre..

L'invention sera mieux comprise à la lecture des figures annexées, qui sont fournies à titre d'exemples et ne présentent aucun caractère limitatif, dans lesquelles :
La figure 1 illustre un ensemble d'une tablette arrière selon l'invention et d'une caisse en blanc de véhicule automobile.
Les figures 2A à 2E illustrent différents modes de réalisation de la tablette selon l'invention.
La figure 3 illustre une des poutres de la tablette arrière selon l'invention, munie d'un support pour lunette arrière.
La figure 4 illustre un ensemble de nervures ainsi qu'un logement pour éclairage de coffre.
La figure 5 illustre un exemple de réalisation d'un moyen d'assemblage de la tablette aux côtés de caisse.

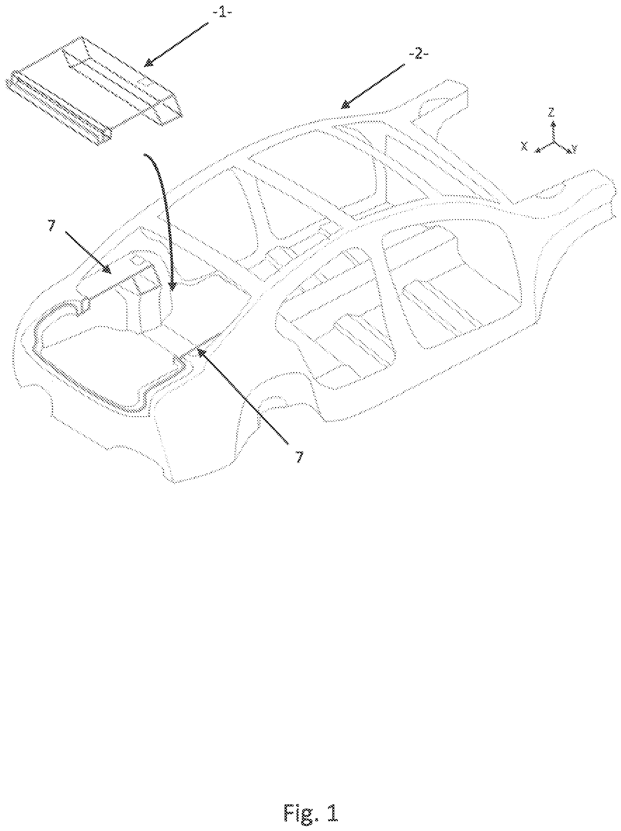

On se réfère maintenant à la figure 1 qui illustre une caisse en blanc (2) de véhicule automobile ainsi qu'une tablette arrière (1) de véhicule automobile selon l'invention, destinée à séparer l'habitacle du compartiment à bagages du véhicule.

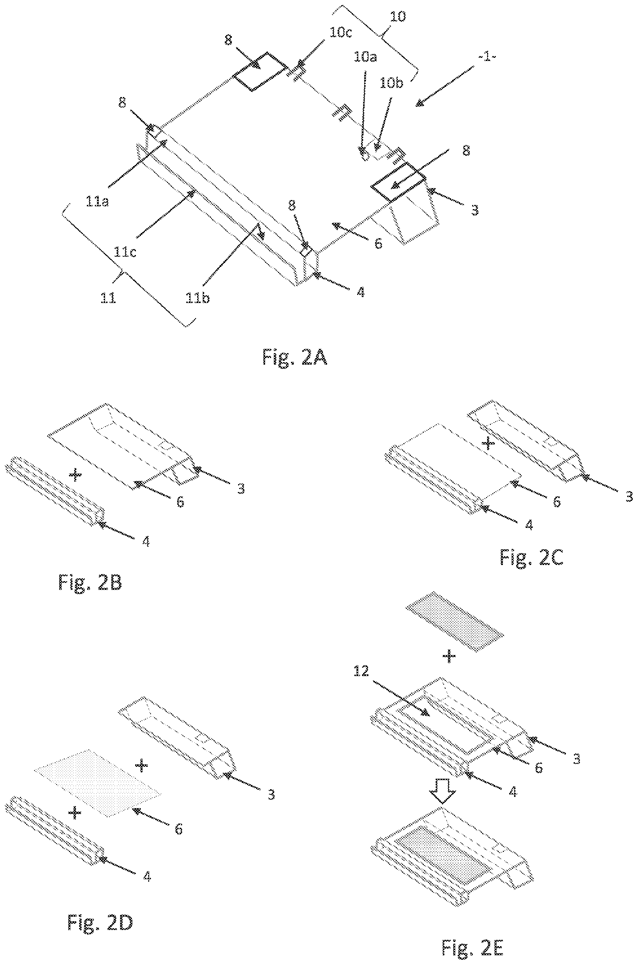

De façon plus détaillée sur les figures 2A à 2E, la tablette arrière (1) comporte les éléments suivants :
- une première poutre (3) constituée d'au moins une peau en matériau composite adaptée à être reliée d'une manière rigide aux deux côtés de caisse (7) (parois latérales) du véhicule, et pouvant comporter un premier ensemble d'interfaces fonctionnelles (10) moulées avec la première poutre (3) ;
   fonctionnelles (10) moulées avec la première poutre (3) ;
- une seconde poutre (4) constituée d'au moins une peau en matériau composite adaptée à être reliée d'une manière rigide aux deux côtés de caisse (7) du véhicule, et pouvant comporter un second ensemble d'interfaces fonctionnelles (11) moulées avec la seconde poutre (4), au moins l'une des poutres (3, 4) comportant un ensemble de nervures (5) de rigidification; et
- un panneau (6) en matériau composite reliant les deux poutres (3, 4) entre elles, ledit panneau (6) comprenant un troisième ensemble d'interfaces fonctionnelles (12) moulées.

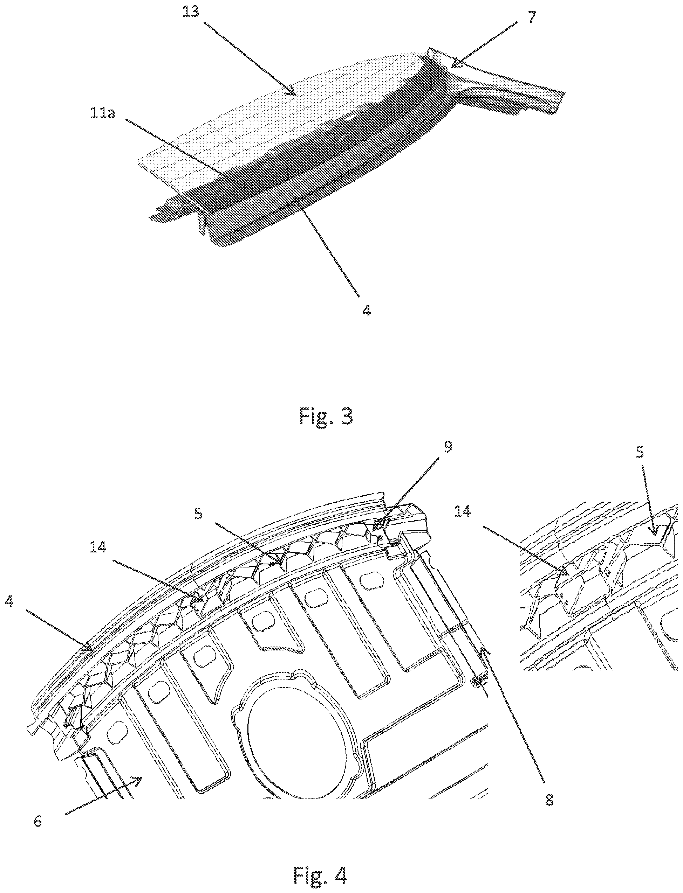

On appelle peau une couche continue de matériau composite. Ainsi, selon l'invention, au moins une des poutres (3, 4) est de préférence mono-peau avec un ensemble de nervures (5) pour en améliorer la rigidité (figures 3, 4 et 5).

Selon un autre mode de réalisation au moins une des poutres (3, 4) comporte un corps creux pour en améliorer la rigidité (figures 1 et 2A à 2E).

Les deux poutres (3, 4) et la tablette (1) peuvent être composées de matériaux composites différents. Ce ou ces matériaux composites peuvent être choisis parmi les matériaux suivants :
- des matériaux thermodurcissables comportant des éléments de renforts. Par exemple, des matériaux thermodurcissables de type SMC ou époxy, comportant des fibres de verre, de carbone ou un mixte des deux. Ces éléments de renfort peuvent être des fibres coupées ou des renforts à fibres continues unidirectionnelles ou tissées ;
- des matériaux thermoplastiques comportant des éléments de renforts. Par exemple, des matériaux thermoplastiques résistant au passage dans les étuves de cataphorèse ou non résistant dans le cas où la tablette (1) est assemblée après le passage en cataphorèse de la caisse en blanc. Parmi les matières thermoplastiques, on peut utiliser des polyamides ou des polyoléfines. Ces matériaux thermoplastiques comportent des éléments de renfort tels que des fibres de verre, de carbone ou un mixte des deux. Ces éléments de renfort peuvent être des fibres coupées ou des renforts à fibres continues unidirectionnelles ou tissées

De par sa composition tout en matériau composite, la tablette arrière (1) selon l'invention permet un gain de masse conséquent par rapport à une tablette de l'art antérieur.

De préférence, on utilise un matériau composite haute performance, c'est-à-dire un matériau comportant au moins 50% en masse d'éléments de renfort (fibre de verre, et/ou fibre de carbone, tissus, UD...), ceci afin d'améliorer encore la rigidité de la tablette arrière (1).

En effet, la tablette (1) agit structurellement sur le véhicule car elle permet à la structure complète du véhicule de répondre correctement aux sollicitations de torsions statiques et dynamiques exercées sur les suspensions et provoquées par les conditions de roulage

Les deux poutres (3, 4) sont adaptées à être reliée d'une manière rigide aux deux côtés de caisse (7) du véhicule, par un assemblage rigide non démontable situé au niveau des extrémités des poutres.

Pour ce faire, au moins une extrémité d'au moins une des poutres (3, 4) ou de du panneau (6), et de préférence chaque extrémité, peut comporter une interface métallique (8) (figure 2A pour les poutres et figure 4 pour le panneau) entre la poutre et le côté de caisse. Cette interface métallique (8) sert de liaison rigide avec les côtés de caisse (7). Elle permet d'utiliser des liaisons rigides de type soudure, permettant d'améliorer encore la rigidité de la tablette arrière (1).

L'interface métallique (8) peut être rapportée sur la poutre (3, 4) en étant surmoulée, bouterollée, collée, emmanchée, rivetée, vissée et/ou sertie.

Toujours pour permettre de relier les poutres (3, 4) d'une manière rigide aux deux côtés de caisse (7) du véhicule, au moins une des poutres (3, 4) peut comporter un moyen d'assemblage (9) aux deux côtés de caisse (7), le moyen (9) étant issu du moulage de la poutre. Utiliser un moyen de liaison issu du moulage permet de limiter le nombre de pièce de la tablette arrière (1), et donc de limiter les opérations de montage et s'assemblage.

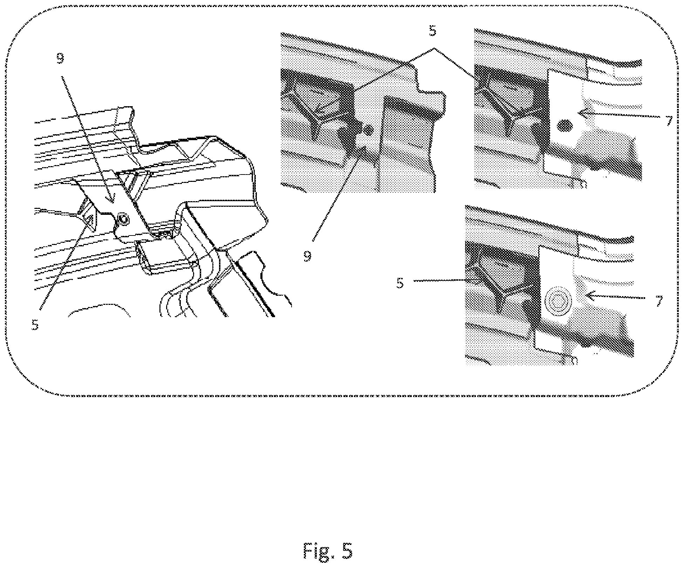

Comme l'illustre la figure 5, il peut s'agir par exemple d'équerres (9) directement produites dans l'opération de moulage par le biais d'un mouvement de calle. Ensuite, l'assemblage avec la côte de caisse peut se faire au moyen d'un écrou et d'une vis insérée dans les équerres (9).

La tablette arrière (1) comporte un ensemble d'interfaces fonctionnelles (10, 11, 12) moulées lors de la fabrication dudit panneau (6) et/ou desdites poutres (3, 4).

De cette façon, on limite le nombre de pièce de la tablette arrière (1), et donc on limite les opérations de montage et s'assemblage.

Ainsi, selon un mode de réalisation, illustré en détail sur la figure 3, la seconde poutre (4) comporte un support transversal (11a) pour piste de collage de lunette arrière (13) (vitre située à l'arrière du véhicule). Ce support (11a) permet d'éviter une opération couteuse qui consiste à préparer la surface de la poutre pour le collage en déposant localement un apprêt, cette dernière opération pouvant être difficile à automatiser.

De préférence, ce support (11a) est un insert métallique surmoulé lors du moulage de la poutre (4), au droit de la piste d'encollage de la lunette (13) arrière, de façon à réaliser une continuité de matériaux entre les côtés de caisse (7) et la poutre (4). Ceci permet de n'utiliser qu'un type de colle parfaitement adapté aux matériaux sur toute la piste de collage.

La seconde poutre (4) peut également comporter le canal supérieur (11b) central d'évacuation des eaux de pluie autour de l'ouverture de coffre, et un bord supérieur (11c) central d'emmanchement de joint d'étanchéité. Dans la partie comportant l'ensemble de nervures (5), la seconde poutre (4) peut comporter un logement (14) pour l'éclairage de coffre, illustré sur la figure 4. Ce logement (14) est issu du moulage et il comprend de préférence des ouvertures sur les parois afin de permettre de clipper l'éclairage. Ce logement (14) comprend également un dégagement afin de permettre le passage du faisceau d'alimentation et de commande d'éclairage et son branchement.

La première poutre (3) peut intégrer au moins l'un des éléments suivants : une fixation isofix (10a) centrale, le logement et la fixation (10b) de l'enrouleur central, les crochets et complément (10c) de fixation pour le dossier de siège arrière et isofix.

Enfin, le panneau (6) de liaison peut comporter le boitier de caisson de basse (11a), les supports de fixation (11b) de l'amplificateur, et/ou un réseau de nervure (11c) permettant de clipper des faisceaux électriques destinés à traverser la tablette (1) pour alimenter la zone arrière du véhicule.

Par ailleurs, la tablette arrière (1) peut comporter un encliquetage pour rapporter une garniture d'habitacle assurant l'aspect intérieur. Cet encliquetage peut se situer sur le pourtour du panneau (6) à l'interface du contour de la garniture, ou au centre, et il peut comporter un ou deux points d'encliquetage.

Le panneau (6) est rapporté sur la première poutre (3) et/ou sur la seconde poutre (4) comme l'illustre les figures 2A à 2D, par exemple par moulage ou surmoulage.

**L'invention concerne également un ensemble** d'une tablette arrière (1) selon l'invention et d'une caisse en blanc (2) de véhicule automobile.

La tablette (1) est reliée aux côtés de caisse (7) de la caisse en blanc (2) par une liaison mécanique rigide non démontable situé aux extrémités d'au moins une poutre (3, 4). La tablette (1) peut ainsi être collée, emmanchée, rivetée, vissée et/ou sertie sur les côtés de caisse (7).

La première poutre (3) est de préférence reliée aux côtés de caisse (7) au niveau des passages de roue arrière.

La seconde poutre (4) est de préférence reliée aux côtés de caisse (7) au niveau d'une zone pouvant supporter une lunette arrière de véhicule.

Elle peut être reliée aux composants de la caisse par le biais d'un écrou et d'une vis insérée dans les équerres (9).

## Revendications

1. Tablette arrière (1) de véhicule automobile destinée à séparer l'habitacle du compartiment à bagages du véhicule, **caractérisé en ce qu'**elle comporte :
- une première poutre (3) et une seconde poutre (4), lesdites poutres (3, 4) étant en matériau composite et adaptées à être reliées d'une manière rigide aux deux côtés de caisse (7) d'un véhicule automobile ; et
- un panneau (6) en matériau composite reliant les deux poutres (3, 4) entre elles.

2. Tablette arrière selon la revendication 1, dans lequel au moins une des poutres (3, 4) comporte un ensemble de nervures (5) de rigidification.

3. Tablette arrière selon l'une des revendications précédentes, dans lequel au moins une des poutres (3, 4) comporte un corps creux pour en améliorer la rigidité.

4. Tablette arrière selon l'une des revendications précédentes, dans lequel au moins l'une des poutres (3, 4) comporte un ensemble d'interfaces fonctionnelles (10, 11) moulées et/ou le panneau (6) comporte un ensemble d'interfaces fonctionnelles (12) moulées.

5. Tablette arrière selon l'une des revendications précédentes, dans lequel au moins un matériau composite est choisi parmi les matériaux suivants :
- matériau thermodurcissable comportant des éléments de renfort ;
- matériau thermoplastique comportant des éléments de renfort.

6. Tablette arrière selon l'une des revendications précédentes, dans lequel au moins une extrémité d'au moins une des poutres (3, 4) et/ou le panneau (6) comporte une interface métallique (8) pouvant servir de liaison avec les côtés de caisse (7).

7. Tablette arrière selon la revendication 6, dans lequel l'interface métallique (8) est rapportée sur la poutre (3, 4) et/ou le panneau (6) en étant surmoulée, bouterollée, collée, emmanchée, rivetée, vissée et/ou sertie.

8. Tablette arrière selon l'une des revendications précédentes, dans lequel au moins une des poutres (3, 4) comporte un moyen d'assemblage (9) aux deux côtés de caisse (7), le moyen (9) étant issu de l'opération de moulage de ladite poutre (3, 4).

9. Tablette arrière selon l'une des revendications précédentes, dans lequel la première poutre (3) intègre au moins l'un des éléments suivants : une fixation isofix centrale, un logement et une fixation d'un enrouleur central, des crochets et compléments de fixation pour un dossier de siège arrière.

10. Tablette arrière selon l'une des revendications précédentes, dans lequel la seconde poutre (4) intègre un support transversal (11a) pour piste de collage de lunette arrière.

11. Tablette arrière selon la revendication 10, dans lequel le support transversal (11a) est un insert métallique surmoulé.

12. Tablette arrière selon l'une des revendications précédentes, dans lequel la seconde poutre (4) intègre au moins l'un des éléments suivants : un canal supérieur central d'évacuation des eaux de pluie autour de l'ouverture de coffre, un bord supérieur central d'emmanchement de joint d'étanchéité, un logement avec un moyen pour clipper un éclairage de coffre.

13. Tablette selon l'une des revendications précédentes, dans lequel le panneau (6) intègre au moins l'un des éléments suivants : le boitier de caisson de basse, les supports de fixation de l'amplificateur, un réseau de nervure permettant de clipper des faisceaux électrique du périmètre.

14. Tablette selon l'une des revendications précédentes, comportant un encliquetage pour garniture d'habitacle assurant l'aspect intérieur.

15. Tablette selon l'une des revendications précédentes, dans lequel le panneau (6) est rapporté sur la première poutre (3) et/ou sur la seconde poutre (4).

16. Ensemble d'une tablette arrière (1) selon l'une des revendications 1 à 15 et d'une caisse en blanc (2) de véhicule automobile.

17. Ensemble selon la revendication 16, dans lequel la première poutre (3) est reliée aux côtés de caisse (7) au niveau des passages de roue arrière.

18. Ensemble selon l'une des revendications 16 et 17, dans lequel la seconde poutre (4) est reliée aux côtés de caisse (7) au niveau d'une zone pouvant supporter une lunette arrière (13) de véhicule.

19. Ensemble selon l'une des revendications 15 à 18, dans lequel la tablette (1) est reliée aux côtés de caisse (7) par une liaison mécanique rigide non démontable situé aux extrémités d'au moins une poutre (3, 4).

## Patentansprüche

1. Hutablage (1) eines Kraftfahrzeugs, bestimmt zum Abtrennen des Fahrgastraums vom Gepäckraum des Fahrzeugs, **dadurch gekennzeichnet, dass** sie Folgendes umfasst:
- einen ersten Träger (3) und einen zweiten Träger (4), wobei die Träger (3, 4) aus einem Verbundmaterial gefertigt und zum starren Verbinden mit den zwei Karosserieseiten (7) eines Kraftfahrzeugs ausgelegt sind; und
- eine Platte (6) aus Verbundmaterial, die die beiden Träger (3, 4) miteinander verbindet.

2. Hutablage nach Anspruch 1, bei der wenigstens einer der Träger (3, 4) einen Satz von Versteifungsrippen (5) aufweist.

3. Hutablage nach einem der vorherigen Ansprüche, bei der wenigstens einer der Träger (3, 4) einen Hohlkörper umfasst, um seine Steifigkeit zu verbessern.

4. Hutablage nach einem der vorherigen Ansprüche, bei der wenigstens einer der Träger (3, 4) einen Satz von geformten funktionellen Verbindungsstellen (10, 11) umfasst und/oder die Platte (6) einen Satz von geformten funktionellen Verbindungsstellen (12) umfasst.

5. Hutablage nach einem der vorherigen Ansprüche, bei der wenigstens ein Verbundmaterial aus den folgenden Materialien ausgewählt ist:
- einem wärmehärtbaren Material, das Verstärkungselemente aufweist;
- einem thermoplastischen Material, das Verstärkungselemente aufweist.

6. Hutablage nach einem der vorherigen Ansprüche, bei der wenigstens ein Ende von wenigstens einem der Träger (3, 4) und/oder die Platte (6) eine metallische Verbindungsstelle (8) aufweist, die als Verbindung mit den Karosserieseiten (7) dienen kann.

7. Hutablage nach Anspruch 6, bei der die metallische Verbindungsstelle (8) durch Umspritzen, Stauchen, Kleben, Einpressen, Nieten, Schrauben und/oder Crimpen an dem Träger (3, 4) und/oder der Platte (6) angebracht ist.

8. Hutablage nach einem der vorherigen Ansprüche, bei der wenigstens einer der Träger (3, 4) ein Mittel (9) zum Montieren an den zwei Karosserieseiten (7) umfasst, wobei das Mittel (9) aus dem Vorgang des Formens des Trägers (3, 4) resultiert.

9. Hutablage nach einem der vorherigen Ansprüche, bei der der erste Träger (3) wenigstens eines der folgenden Elemente integriert: eine zentrale Isofix-Befestigung, eine Aufnahme und eine Befestigung einer zentralen Aufrollvorrichtung, Haken und Befestigungszusätze für eine Rücksitzlehne.

10. Hutablage nach einem der vorherigen Ansprüche, bei der der zweite Träger (4) eine transversale Auflage (11a) für eine Heckscheibenverklebungsspur integriert.

11. Hutablage nach Anspruch 10, bei der die transversale Auflage (11a) ein umspritzter metallischer Einsatz ist.

12. Hutablage nach einem der vorherigen Ansprüche, bei der der zweite Träger (4) wenigstens eines der folgenden Elemente integriert: einen oberen zentralen Ablasskanal für Regenwasser um die Gepäckraumöffnung herum, einen zentralen oberen Dichtungseinpressrand, eine Aufnahme mit einem Mittel zum Anklammern einer Gepäckraumbeleuchtung.

13. Ablage nach einem der vorherigen Ansprüche, bei der die Platte (6) wenigstens eines der folgenden Elemente integriert: die Subwoofer-Box, Halterungen zum Befestigen des Verstärkers, ein Netz von Rippen, so dass die Kabelbäume des Bereichs geklippt werden können.

14. Ablage nach einem der vorherigen Ansprüche, die einen Schnappverschluss für Fahrgastraumverkleidung zum Gewährleisten des Innenerscheinungsbild umfasst.

15. Ablage nach einem der vorherigen Ansprüche, bei der die Platte (6) am ersten Träger (3) und/oder am zweiten Träger (4) angebracht ist.

16. Baugruppe aus einer Hutablage (1) nach einem der Ansprüche 1 bis 15 und einem Kfz-Rohling (2).

17. Baugruppe nach Anspruch 16, bei der der erste Träger (3) mit den Karosserieseiten (7) mit den Hinterradeinbaustrukturen verbunden ist.

18. Baugruppe nach einem der Ansprüche 16 und 17, bei der der zweite Träger (4) mit den Karosserieseiten (7) in einer Zone verbunden ist, die eine Heckscheibe (13) des Fahrzeugs tragen kann.

19. Baugruppe nach einem der Ansprüche 15 bis 18, bei der die Ablage (1) mit den Karosserieseiten (7) durch eine nicht demontierbare starre mechanische Verbindung verbunden ist, die sich an den Enden von wenigstens einem Träger (3, 4) befindet.

## Claims

1. Motor vehicle rear parcel shelf (1) intended to separate the passenger compartment from the luggage compartment of the vehicle, **characterised in that** it comprises:
- a first beam (3) and a second beam (4), said beams (3, 4) being made of composite material and designed to be connected rigidly to the two sides (7) of the body of a motor vehicle; and
- a panel (6) made of composite material connecting the two beams (3, 4) together.

2. Rear parcel shelf according to claim 1, wherein at least one of the beams (3, 4) comprises a set of stiffening ribs (5).

3. Rear parcel shelf according to one of the preceding claims, wherein at least one of the beams (3, 4) comprises a hollow body to improve the rigidity.

4. Rear parcel shelf according to one of the preceding claims, wherein at least one of the beams (3, 4) comprises a set of moulded functional interfaces (10, 11) and/or the panel (6) comprises a set of moulded functional interfaces (12).

5. Rear parcel shelf according to one of the preceding claims, wherein at least one composite material is selected from the following materials:
- thermosetting material having reinforcing elements;
- thermoplastic material having reinforcing elements.

6. Rear parcel shelf according to one of the preceding claims, wherein at least one end of at least one of the beams (3, 4) and/or the panel (6) comprises a metal interface (8) which can be used for connection with the sides (7) of the body.

7. Rear parcel shelf according to claim 6, wherein the metal interface (8) is attached to the beam (3, 4) and/or the panel (6) by being overmoulded, upset, bonded, inserted, riveted, screwed and/or crimped.

8. Rear parcel shelf according to one of the preceding claims, wherein at least one of the beams (3, 4) comprises an assembly means (9) at the two sides (7) of the body, the means (9) being obtained by the moulding operation of said beam (3, 4).

9. Rear parcel shelf according to one of the preceding claims, wherein the first beam (3) includes at least one of the following elements: a central Isofix attachment, a housing and an attachment for a central winder, attachment hooks and complements for a rear seat back.

10. Rear parcel shelf according to one of the preceding claims, wherein the second beam (4) includes a transverse support (11a) for rear window bonding track.

11. Rear parcel shelf according to claim 10, wherein the transverse support (11a) is an overmoulded metal insert.

12. Rear parcel shelf according to one of the preceding claims, wherein the second beam (4) includes at least one of the following elements: a central upper channel for evacuating rainwater around the boot opening, a central upper edge for insertion of a seal, a housing with a means for clipping a boot light.

13. Parcel shelf according to one of the preceding claims, wherein the panel (6) includes at least one of the following elements: the subwoofer enclosure, the amplifier mounting brackets, a network of ribs to clip wiring harnesses around the perimeter.

14. Parcel shelf according to one of the preceding claims, comprising a clip for passenger compartment trim providing the inner appearance finish.

15. Parcel shelf according to one of the preceding claims, wherein the panel (6) is attached to the first beam (3) and/or to the second beam (4).

16. Assembly of a rear parcel shelf (1) according to one of claims 1 to 15 and a motor vehicle body in white (2).

17. Assembly according to claim 16, wherein the first beam (3) is connected to the sides (7) of the body at the rear wheel arches.

18. Assembly according to claim 16 or 17, wherein the second beam (4) is connected to the sides (7) of the body at an area capable of supporting a vehicle rear window (13).

19. Assembly according to one of claims 15 to 18, wherein the parcel shelf (1) is connected to the sides (7) of the body by a non-removable rigid mechanical connection at the ends of at least one beam (3, 4).
